(19) Europäisches Patentamt
European Patent Office
Office européen des brevets

(11) **EP 4 761 191 A1**

(12) **EUROPEAN PATENT APPLICATION**
published in accordance with Art. 153(4) EPC

(43) Date of publication:
**17.06.2026 Bulletin 2026/25**

(21) Application number: **23950231.3**

(22) Date of filing: **31.08.2023**

(51) International Patent Classification (IPC):
*H04L 25/02* *(2006.01)*

(52) Cooperative Patent Classification (CPC):
**H04L 25/02**

(86) International application number:
**PCT/CN2023/116304**

(87) International publication number:
**WO 2025/043648 (06.03.2025 Gazette 2025/10)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **HUAWEI TECHNOLOGIES CO., LTD.**
**Shenzhen, Guangdong 518129 (CN)**

(72) Inventors:
• **JIANG, Chenglong**
  **Shenzhen, Guangdong 518129 (CN)**
• **BI, Xiaoyan**
  **Shenzhen, Guangdong 518129 (CN)**
• **JIANG, Yisheng**
  **Shenzhen, Guangdong 518129 (CN)**
• **LIU, Yong**
  **Shenzhen, Guangdong 518129 (CN)**
• **LIU, Lei**
  **Shenzhen, Guangdong 518129 (CN)**

(74) Representative: **Epping - Hermann - Fischer**
**Patentanwaltsgesellschaft mbH**
**Schloßschmidstraße 5**
**80639 München (DE)**

(54) **METHOD FOR SENDING REFERENCE SIGNAL, METHOD FOR RECEIVING REFERENCE SIGNAL, AND COMMUNICATION APPARATUS**

(57)     This application provides a reference signal sending and receiving method and a communication apparatus. The method includes: determining a plurality of communication resources, where the plurality of communication resources are used to carry a demodulation reference signal, channel vectors corresponding to any two adjacent communication resources in the plurality of communication resources meet a first relationship, and the first relationship includes that a spatial included angle between the channel vectors is a first value and/or a rotation included angle between the channel vectors is a second value; and sending the demodulation reference signal to a terminal device on the plurality of communication resources. The channel vectors corresponding to the any two adjacent communication resources in the plurality of communication resources for transmitting the reference signal are set to meet the first relationship, so that spatial included angles and/or rotation included angles between every two adjacent communication resources for carrying the demodulation reference signal are the same. This can improve channel estimation performance.

FIG. 2

**Description**

**TECHNICAL FIELD**

This application relates to the communication field, and more specifically, to a reference signal sending and receiving method and a communication apparatus.

**BACKGROUND**

A multiple-input multiple-output (multiple-input multiple-output, MIMO) technology is one of key technologies used by a new generation mobile communication system. The multiple-input multiple-output technology can increase a capacity and spectral efficiency of the communication system by multiple times without increasing a bandwidth, and can also mitigate multipath fading through multipath transmission, effectively detecting and eliminating channel interference, and improving channel reliability.

In the MIMO technology, channel estimation is required to transmit and receive data, obtain system synchronization, and feed back channel information. Channel estimation refers to tracking a time domain change and/or a frequency domain change of a channel by using a reference signal known to a transmit end and a receive end. As a number of transmission layers of a data stream in the MIMO technology increases, a reference signal used for channel estimation also needs to be extended. An existing reference signal extension manner reduces frequency domain density of a reference signal, and therefore may affect channel estimation performance. Therefore, a reference signal transmission method is urgently needed to improve channel estimation performance.

**SUMMARY**

This application provides a reference signal sending and receiving method and a communication apparatus, to improve channel estimation performance.

According to a first aspect, a reference signal sending method is provided. The method may be performed by a network device, or may be performed by a module (for example, a chip or a circuit) of a network device, or may be performed by a logical node, a logical module, or software that can implement all or some functions of a network device. This is not limited in this application.

The method includes: determining a plurality of communication resources, where the plurality of communication resources are used to carry a demodulation reference signal, channel vectors corresponding to any two adjacent communication resources in the plurality of communication resources meet a first relationship, and the first relationship includes that a spatial included angle between the channel vectors is a first value and/or a rotation included angle between the channel vectors is a second value; and sending the demodulation reference signal to a terminal device on the plurality of communication resources.

Based on the foregoing solution, the channel vectors corresponding to the any two adjacent communication resources in the plurality of communication resources for transmitting the reference signal are set to meet the first relationship, so that spatial included angles and/or rotation included angles between every two adjacent communication resources for carrying the demodulation reference signal are the same. This can improve channel estimation performance.

With reference to the first aspect, in some implementations of the first aspect, the communication resource is a first frequency domain resource, and before determining the plurality of communication resources, the method further includes: determining a channel vector corresponding to the first frequency domain resource in a scheduled bandwidth, where a frequency domain range of the first frequency domain resource is less than or equal to a frequency domain range of the scheduled bandwidth.

With reference to the first aspect, in some implementations of the first aspect, a channel matrix corresponding to the first frequency domain resource in the scheduled bandwidth is determined; and the channel vector corresponding to the first frequency domain resource is determined based on the channel matrix.

Based on the foregoing solution, the plurality of frequency domain resources that meet the first relationship may be determined by determining the channel vector corresponding to the first frequency domain resource.

With reference to the first aspect, in some implementations of the first aspect, the communication resource is a time domain resource, and before determining the plurality of communication resources, the method further includes: determining a channel vector within a first time domain range.

With reference to the first aspect, in some implementations of the first aspect, a channel matrix corresponding to the first time domain resource in the scheduled bandwidth is determined; and a channel vector corresponding to the first time domain resource is determined based on the channel matrix.

Based on the foregoing solution, the plurality of time domain resources that meet the first relationship may be determined by determining the channel vector corresponding to the first time domain resource.

With reference to the first aspect, in some implementations of the first aspect, at least one of the first value and the second value is determined based on the channel vector and density of the demodulation reference signal.

Based on the foregoing solution, when the density of the demodulation reference signal is determined, at least one of the first value and the second value may be determined. This can improve channel estimation performance when channel estimation is performed at the density of the demodulation reference signal.

With reference to the first aspect, in some implementations of the first aspect, first indication information is sent to the terminal device, where the first indication information indicates the plurality of communication resources. Based on the foregoing solution, the indication information indicating the plurality of communication resources is sent to the terminal device, so that the terminal device can receive the demodulation reference signal on the communication resources.

With reference to the first aspect, in some implementations of the first aspect, second indication information is sent to the terminal device, where the second indication information indicates the first value and/or the second value, and the first value and/or the second value are/is used for channel estimation.

Based on the foregoing solution, the indication information indicating the first value and/or the second value is sent to the terminal device, so that the terminal device can perform channel estimation based on the first value and/or the second value.

According to a second aspect, a reference signal receiving method is provided. The method may be performed by a terminal device, or may be performed by a module (for example, a chip or a circuit) of a terminal device, or may be performed by a logical node, a logical module, or software that can implement all or some functions of a terminal device. This is not limited in this application.

The method includes: determining a plurality of communication resources, where channel vectors corresponding to any two adjacent communication resources in the plurality of communication resources meet a first relationship, and the first relationship includes that a spatial included angle between the channel vectors is a first value and/or a rotation included angle between the channel vectors is a second value; receiving a demodulation reference signal from a network device on the plurality of communication resources; and performing channel estimation based on the demodulation reference signal.

Based on the foregoing solution, the channel vectors corresponding to the any two adjacent communication resources in the plurality of communication resources for transmitting the reference signal are set to meet the first relationship, so that spatial included angles and/or rotation included angles between every two adjacent communication resources for carrying the demodulation reference signal are the same. This can improve channel estimation performance. With reference to the second aspect, in some implementations of the second aspect, the communication resource is a first frequency domain resource, a channel vector corresponding to the first frequency domain resource in a scheduled bandwidth is determined based on a channel matrix, and a frequency domain range of the first frequency domain resource is less than or equal to a frequency domain range of the scheduled bandwidth.

Based on the foregoing solution, the channel vector corresponding to the first frequency domain resource may be determined by determining the channel matrix corresponding to the first frequency domain resource, so that the plurality of frequency domain resources that meet the first relationship may be determined.

With reference to the second aspect, in some implementations of the second aspect, the communication resource is a time domain resource, and a channel vector corresponding to the time domain resource is determined based on a channel matrix within a first time domain range.

Based on the foregoing solution, the channel vector corresponding to the first time domain resource may be determined by determining a channel matrix corresponding to the first time domain resource, so that the plurality of time domain resources that meet the first relationship may be determined.

With reference to the second aspect, in some implementations of the second aspect, first indication information is received from the network device, where the first indication information indicates the plurality of communication resources.

Based on the foregoing solution, the indication information indicating the plurality of communication resources is received from the network device, so that the terminal device can receive the demodulation reference signal on the communication resources.

With reference to the second aspect, in some implementations of the second aspect, second indication information is received from the network device, where the second indication information indicates the first value and/or the second value, and the first value and/or the second value are/is used for channel estimation.

Based on the foregoing solution, the indication information indicating the first value and/or the second value is received from the network device, so that the terminal device can perform channel estimation based on the first value and/or the second value.

According to a third aspect, a communication apparatus is provided. The communication apparatus includes a processing unit and a transceiver unit. The apparatus may be a network device, or may be a module (for example, a chip or a circuit) of a network device, or may be a logical node, a logical module, or software that can implement all or some functions of a network device. The processing unit is configured to determine a plurality of communication resources, where the plurality of communication resources are used to carry a demodulation reference signal, channel vectors corresponding to any two adjacent communication resources in the plurality of communication resources meet a first relationship, and the first relationship includes that a spatial included angle between the channel vectors is a first value and/or a rotation included angle between the channel vectors is a second value. The transceiver unit is configured to send the demodulation reference signal to a terminal device on the plurality of communication resources. With reference to the third aspect, in some implementations of the third aspect, the communication resource is a first frequency domain resource, and the processing unit is further configured to determine a channel vector corresponding to the first frequency domain resource in a scheduled bandwidth, where a frequency domain range of the first frequency domain resource is less than or equal to a frequency domain range of the scheduled bandwidth.

With reference to the third aspect, in some implementations of the third aspect, a channel matrix corresponding to the first frequency domain resource in the scheduled bandwidth is determined; and the channel vector corresponding to the first frequency domain resource is determined based on the channel matrix.

With reference to the third aspect, in some implementations of the third aspect, the communication resource is a time domain resource, and before the plurality of communication resources are determined, a channel vector within a first time domain range is determined.

With reference to the third aspect, in some implementations of the third aspect, the processing unit is specifically configured to: determine a channel matrix corresponding to the first time domain resource in the scheduled bandwidth; and determine, based on the channel matrix, a channel vector corresponding to the first time domain resource.

With reference to the third aspect, in some implementations of the third aspect, the processing unit is further configured to determine at least one of the first value and the second value based on the channel vector and density of the demodulation reference signal.

With reference to the third aspect, in some implementations of the third aspect, the transceiver unit is further configured to send first indication information to the terminal device, where the first indication information indicates the plurality of communication resources.

With reference to the third aspect, in some implementations of the third aspect, the transceiver unit is further configured to send second indication information to the terminal device, where the second indication information indicates the first value and/or the second value, and the first value and/or the second value are/is used for channel estimation.

According to a fourth aspect, a communication apparatus is provided. The apparatus includes a transceiver unit and a processing unit. The apparatus may be a terminal device, or may be a module (for example, a chip or a circuit) of a terminal device, or may be a logical node, a logical module, or software that can implement all or some functions of a terminal device. The processing unit is configured to determine a plurality of communication resources, where channel vectors corresponding to any two adjacent communication resources in the plurality of communication resources meet a first relationship, and the first relationship includes that a spatial included angle between the channel vectors is a first value and/or a rotation included angle between the channel vectors is a second value. The transceiver unit is configured to receive a demodulation reference signal from a network device on the plurality of communication resources. The processing unit is further configured to perform channel estimation based on the demodulation reference signal.

With reference to the fourth aspect, in some implementations of the fourth aspect, the communication resource is a first frequency domain resource, a channel vector corresponding to the first frequency domain resource in a scheduled bandwidth is determined based on a channel matrix, and a frequency domain range of the first frequency domain resource is less than or equal to a frequency domain range of the scheduled bandwidth.

With reference to the fourth aspect, in some implementations of the fourth aspect, the communication resource is a time domain resource, and a channel vector corresponding to the time domain resource is determined based on a channel matrix within a first time domain range.

With reference to the fourth aspect, in some implementations of the fourth aspect, the transceiver unit is further configured to receive first indication information from the network device, where the first indication information indicates the plurality of communication resources; and the processing unit is specifically configured to determine the plurality of communication resources based on the first indication information.

With reference to the fourth aspect, in some implementations of the fourth aspect, the transceiver unit is further configured to receive second indication information from the network device, where the second indication information indicates the first value and/or the second value, and the first value and/or the second value are/is used for channel estimation.

According to a fifth aspect, a communication apparatus is provided, including a processor. The processor is coupled to a memory, and may be configured to execute instructions in the memory, to implement the method in any one of the first aspect and the possible implementations of the first aspect. For example, the communication apparatus further includes the memory. The communication apparatus further includes a communication interface. The processor is coupled to the communication interface.

In an implementation, the communication apparatus is a network device. When the communication apparatus is the network device, the communication interface may be a transceiver or an input/output interface.

In another implementation, the communication apparatus is a chip configured in a network device. When the communication apparatus is the chip configured in the network device, the communication interface may be an input/output interface.

For example, the transceiver may be a transceiver circuit. The input/output interface may be an input/output circuit.

According to a sixth aspect, a communication apparatus is provided, including a processor. The processor is coupled to a memory, and may be configured to execute instructions in the memory, to implement the method in any one of the second aspect and the possible implementations of the second aspect. For example, the communication apparatus further includes the memory. The communication apparatus further includes a communication interface. The processor is coupled to the communication interface.

In an implementation, the communication apparatus is a terminal device. When the communication apparatus is the terminal device, the communication interface may be a transceiver or an input/output interface.

In another implementation, the communication apparatus is a chip or a chip system configured in a terminal device. When the communication apparatus is the chip or the chip system configured in the terminal device, the communication interface may be an input/output interface.

For example, the transceiver may be a transceiver circuit. The input/output interface may be an input/output circuit.

According to a seventh aspect, a processor is provided, including an input circuit, an output circuit, and a processing circuit. The processing circuit is configured to receive a signal by using the input circuit, and transmit a signal by using the output circuit, so that the processor performs the method in any one of the possible implementations of the first aspect and the second aspect.

In a specific implementation process, the processor may be one or more chips, the input circuit may be an input pin, the output circuit may be an output pin, and the processing circuit may be a transistor, a gate circuit, a trigger, any logic circuit, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

According to an eighth aspect, a processing apparatus is provided, including a processor and a memory. The processor is configured to read instructions stored in the memory; receive a signal by using a receiver; and transmit a signal by using a transmitter, to perform the method in any one of the possible implementations of the first aspect and the second aspect.

For example, there are one or more processors, and there are one or more memories.

For example, the memory may be integrated with the processor, or the memory and the processor are separately disposed.

In a specific implementation process, the memory may be a non-transitory (non-transitory) memory, for example, a read-only memory (read-only memory, ROM). The memory and the processor may be integrated into one chip, or may be separately disposed in different chips. A type of the memory and a manner in which the memory and the processor are disposed are not limited in embodiments of this application.

It should be understood that, a related data exchange process such as sending of indication information may be a process of outputting the indication information from the processor, and receiving of capability information may be a process of receiving the input capability information by the processor. Specifically, data output by the processor may be output to the transmitter, and input data received by the processor may be from the receiver. The transmitter and the receiver may be collectively referred to as a transceiver.

The processing apparatus in the eighth aspect may be one or more chips. The processor in the processing apparatus may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory. The memory may be integrated into the processor, or may be located outside the processor and exist independently.

According to a ninth aspect, a computer program product is provided. The computer program product includes a computer program (which may also be referred to as code or instructions). When the computer program is run, a computer is enabled to perform the method in any one of the possible implementations of the first aspect and the second aspect.

According to a tenth aspect, a computer-readable storage medium is provided. The computer-readable storage medium stores a computer program (which may also be referred to as code or instructions). When the computer program is run on a computer, the method in any one of the possible implementations of the first aspect and the second aspect is performed.

According to an eleventh aspect, a communication system is provided, including at least one network device and at least one terminal device. The at least one network device is configured to perform the method in any one of the first aspect and the possible implementations of the first aspect. The at least one terminal device is configured to perform the method in any one of the second aspect and the possible implementations of the second aspect.

For descriptions of beneficial effect of any one of the third aspect to the eleventh aspect, refer to descriptions of the beneficial effect of the first aspect and the second aspect.

## BRIEF DESCRIPTION OF DRAWINGS

FIG. 1 is a diagram of a communication system 100 to which embodiments of this application are applicable;

FIG. 2 is a schematic flowchart of a reference signal sending and receiving method according to an embodiment of this application;

FIG. 3 is a diagram of a communication resource according to an embodiment of this application;

FIG. 4 is a diagram of a communication apparatus according to an embodiment of this application;

FIG. 5 is a diagram of another communication apparatus according to an embodiment of this application;

FIG. 6 is a block diagram of a network device according to an embodiment of this application; and

FIG. 7 is a block diagram of a terminal device according to an embodiment of this application.

## DESCRIPTION OF EMBODIMENTS

The following describes technical solutions of this application with reference to accompanying drawings.

The technical solutions of this application may be applied to various communication systems, for example, a 5th generation (5th generation, 5G) system or new radio (new radio, NR), an evolved packet core (evolved packet core, EPC) network, an evolved packet system (evolved packet system, EPS), an evolved universal mobile telecommunications system (universal mobile telecommunications system, UMTS) terrestrial radio access network (evolved UMTS terrestrial radio access network, E-UTRAN), a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a sixth generation mobile communication system.

The technical solutions in embodiments of this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

A terminal device in embodiments of this application may be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice/data for a user, for example, a handheld device having a wireless connection function or a vehicle-mounted device. Currently, some terminals may be, for example, a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a hand-held device with a wireless communication function, a computing device or another processing device connected to a wireless modem, a wearable device, a terminal device in a 5G network, a terminal device in a future evolved public land mobile network (public land mobile network, PLMN), or the like. This is not limited in embodiments of this application.

In embodiments of this application, the terminal device may alternatively be a wearable device, or may be referred to as a wearable intelligent device. The wearable device may be a general term of a wearable device that is intelligently designed and developed for daily wear by using a wearable technology, for example, glasses, gloves, a watch, clothing, and shoes. In other words, the wearable device is a portable device that can be directly worn on a body or integrated into clothes or an accessory of a user. The wearable device is not only a hardware device, and can implement powerful functions through software support, data interaction, and cloud interaction. In a broad sense, wearable intelligent devices include full-featured and large-sized devices that can implement all or some of functions without depending on smartphones, for example, smart watches or smart glasses, and include devices that focus on only one type of application function and need to collaboratively work with other devices such as smartphones, for example, various smart bands, and smart jewelry for monitoring physical signs.

In embodiments of this application, the terminal device may alternatively be a terminal device in an IoT system. The IoT is an important part of future development of information technologies. A main technical feature of the IoT is connecting a thing to a network by using a communication technology, to implement an intelligent network for interconnection between a person and a machine or between one thing and another.

In addition, the terminal device may further include a sensor like an intelligent printer, a train detector, or a gas station, which mainly functions to collect data (a part of terminal devices), receive control information and downlink data from a network device, send an electromagnetic wave, and transmit uplink data to the network device.

The network device in embodiments of this application may be a device configured to communicate with the terminal device. The network device may be a next-generation base station (gNodeB, gNB) in a 5G communication system, a next-generation base station in a 6G mobile communication system, a base station in a future mobile communication system, an access node in a Wi-Fi system, an evolved NodeB (evolved NodeB, eNB) in an LTE system, a radio network controller (radio network controller, RNC), a NodeB (NodeB, NB), a base station controller (base station controller, BSC), a home base station (for example, a home evolved NodeB or a home NodeB, HNB), a baseband unit (baseband unit, BBU), a transmission reception point (transmission reception point, TRP), a transmission point (transmission point, TP), a base transceiver station (base transceiver station, BTS), or the like.

In a network structure, the network device may include a central unit (central unit, CU), a distributed unit (distributed unit, DU), a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). The network device may provide a service for a cell. The terminal device communicates with a base station on a transmission resource (for example, a frequency domain resource, in other words, a spectrum resource) used for the cell. The cell may be a cell corresponding to the base station (for example, a base station). The cell may belong to a macro base station, or may belong to a base station corresponding to a small cell (small cell). The small cell herein may include a metro cell (metro cell), a micro cell (micro cell), a pico cell (pico cell), a femto cell (femto cell), and the like. These small cells have features of small coverage and low transmit power, and are applicable to providing a high-speed data transmission service. The network device may be a macro base station, or may be a micro base station or an indoor base station, or may be a relay node or a donor node, a device that provides a wireless communication service for user equipment and that is in a V2X communication system, a radio controller in a cloud radio access network (cloud radio access network, CRAN) scenario, a relay station, a vehicle-mounted device, a wearable device, a network device in a future evolved network, or the like. A specific technology and a specific device form used by the network device are not limited in embodiments of this application.

In different systems, the CU (or the CU-CP and the CU-UP), the DU, or the RU may also have different names, but a person skilled in the art may understand meanings thereof. For example, in an open-radio access network (open-radio access network, O-RAN) system, the CU may also be referred to as an open-central unit (open-central unit, O-CU) (open CU), the DU may also be referred to as an open-distributed unit (open-distributed unit, O-DU) (open DU), the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

In embodiments of this application, the terminal device or the network device may include a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). An operating system may be any one or more types of computer operating systems that implement service processing by using a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution entity of a method provided in this application is not particularly limited in this application, provided that a program that records code of the method provided in this application can be run to perform communication according to the method provided in this application. For example, the method provided in this application may be performed by a terminal device or a network device, or may be performed by a functional module that is in a terminal device or a network device and that can invoke and execute the program.

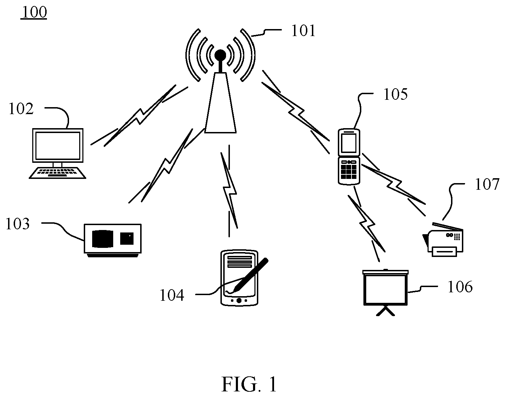

FIG. 1 is an example of an architectural diagram of a communication system 100 to which embodiments of this application are applicable. As shown in FIG. 1, the communication system 100 may include at least one network device, for example, a network device 101 shown in FIG. 1. The communication system 100 may further include at least one terminal device, for example, terminal devices 102 to 107 shown in FIG. 1. The network device 101 may provide communication coverage for a specific geographical area. The terminal devices 102 to 107 may be located in the coverage area, and the terminal devices 102 to 107 may be mobile or fixed. The network device 101 may communicate with one or more of the terminal devices 102 to 107 over a radio link.

Optionally, the terminal devices may directly communicate with each other. For example, direct communication between the terminal devices may be implemented by using a device-to-device (device-to-device, D2D) technology. As shown in FIG. 1, the D2D technology may be used for direct communication between the terminal device 105 and the terminal device 106, and between the terminal device 105 and the terminal device 107. The terminal device 106 and the terminal device 107 may separately or simultaneously communicate with the terminal device 105.

The terminal devices 105 to 107 may separately communicate with the network device 101, for example, may directly communicate with the network device 101. For example, the terminal device 105 and the terminal device 106 in FIG. 1 may directly communicate with the network device 101. Alternatively, the terminal devices 105 to 107 may indirectly communicate with the network device 101. As shown in the figure, the terminal device 107 communicates with the network device 101 by using the terminal device 105.

A plurality of antennas may be configured for each of the communication devices in the communication system 100. The plurality of antennas configured for each communication device may include at least one transmit antenna configured to send a signal and at least one receive antenna configured to receive a signal. Therefore, the communication devices in the communication system 100 may communicate with each other by using a MIMO technology.

It should be understood that FIG. 1 is merely a simplified diagram of an example for ease of understanding. The communication system 100 may further include another network device or another terminal device, which is not shown in FIG. 1.

For ease of understanding of embodiments of this application, the following first briefly describes terms and backgrounds in this application.

1. Time frequency resource

In embodiments of this application, data or information may be carried by using the time frequency resource. The time frequency resource may include a resource in time domain and a resource in frequency domain. The time frequency resource may include one or more time domain units (which may also be referred to as time units, units of time, or the like), and the time frequency resource may include one or more frequency domain units.

One time domain unit may be one symbol or several symbols, for example, an orthogonal frequency division multiplexing (orthogonal frequency division multiplexing, OFDM) symbols, one slot (slot), one mini-slot (mini-slot), or one subframe (subframe). One slot may include seven or 14 symbols. One mini-slot may include at least one symbol (for example, two symbols, seven symbols, or 14 symbols, or symbols of any number less than or equal to 14). Duration of one subframe in time domain may be 1 millisecond (ms).

It should be understood that the foregoing enumerated time domain unit size is merely for ease of understanding the solutions of this application, and does not constitute a limitation on the protection scope of this application. The time domain unit size may be another value. This is not limited in this application.

One frequency domain unit may be one resource block (resource block, RB), one subcarrier (subcarrier), one resource block group (resource block group, RBG), one predefined subband (subband), one precoding resource block group (precoding resource block group, PRG), one bandwidth part (bandwidth part, BWP), one resource element (resource element, RE) (which may also be referred to as a resource unit or a resource element), one carrier, or one serving cell.

2. Demodulation reference signal (demodulation reference signal, DMRS)

In a new radio (new radio, NR) system, the DMRS may be used for channel estimation, so that a receive end detects and demodulates data on a corresponding channel.

A data channel PDSCH is used as an example. Same precoding is usually performed on the DMRS and a sent data signal, to ensure that the DMRS and the data signal pass through a same equivalent channel. It is assumed that a DMRS vector sent by a transmit end is $s$, a sent data signal vector is $x$, and a same precoding operation (multiplying by a same precoding matrix *P*) is performed on the DMRS and the data signal. A data signal vector *y* and a DMRS vector r that are received by the receive end may be respectively represented by using Formula (1) and Formula (2):

$$y = HPx + n = \tilde{H}x + n \tag{1}$$

$$r = HPs + n = \tilde{H}s + n \tag{2}$$

Herein, $\tilde{H}$ ($\tilde{H}=HP$, where *H* is a channel matrix) represents the equivalent channel through which the data signal and the DMRS pass, and n represents additive noise. The receive end may perform, based on the known DMRS vector *s*, estimation on the channel matrix $\tilde{H}$ by using a channel estimation algorithm, for example, least square (least square, LS) channel estimation or minimum mean square error (minimum mean square error, MMSE) channel estimation. Demodulation of the data signal may be completed based on the channel matrix.

2. Channel vector and (spatial) included angle and rotation included angle between channel vectors

The channel vector is a channel of a specific reference signal port at a given time-frequency resource location, and a dimension of the channel vector may be $N_{Rx}$-1, where $N_{Rx}$ represents a number of receive end antennas.

A channel vector $s_0$ and a channel vector $s_1$ are used as examples. An included angle between the two channel vectors may be represented by using the following Formula:

$$\theta = \arccos\left(\frac{|s_0^H s_1|}{\|s_0\|_2 \cdot \|s_1\|_2}\right) \tag{3}$$

Herein, $\theta$ represents the included angle between the channel vector $s_0$ and the channel vector $s_1$. $|s_0^H s_1|$ represents taking an absolute value of $s_0^H s_1$, $\|s_0\|_2$ and $\|s_1\|_2$ respectively represents taking a 2-norm for the channel vectors $s_0$ and $s_1$, and $s_0^H$ represents conjugate transposition on the channel vector $s_0$.

A rotation included angle between the two channel vectors may be represented by using the following Formula:

$$\phi = \arctan\left(\frac{\mathrm{Im}(s_0^H s_1)}{\mathrm{Re}(s_0^H s_1)}\right) \tag{4}$$

Herein, $\phi$ represents the rotation included angle between the channel vector $s_0$ and the channel vector $s_1$, Re(x) represents taking a real part of a complex number x, and Im(x) represents taking an imaginary part of the complex number x.

It should be understood that the included angle and/or the rotation included angle between the channel vectors in embodiments of this application may alternatively be replaced with another equivalent parameter, to be specific, the equivalent parameter may be determined (derived) based on the included angle and/or the rotation included angle between the channels, and vice versa. For example, for the spatial included angle $\theta$ between the two channel vectors, an equivalent parameter of the spatial included angle may be $\omega$:

$$\omega = \frac{\mathrm{Im}\left(s_0^H s_1\right)}{\mathrm{Re}\left(s_0^H s_1\right)} \tag{5}$$

For the spatial included angle $\theta$ between the two channel vectors, an equivalent parameter of the spatial included angle may be $\rho$:

$$\rho = \frac{\left|s_0^H s_1\right|}{\left\|s_0\right\|_2 \cdot \left\|s_1\right\|_2} \tag{6}$$

Alternatively, $\omega$ and $\rho$ may be respectively represented as $\omega = \dfrac{\mathrm{Im}\left(s_0^H s_1\right)}{\left\|s_0\right\|_2 \cdot \left\|s_1\right\|_2}$ and $\rho = \dfrac{\mathrm{Re}\left(s_0^H s_1\right)}{\left\|s_0\right\|_2 \cdot \left\|s_1\right\|_2}$.

With introduction of a MIMO technology into a wireless communication system, the transmit end may transmit multi-stream data on a same time frequency resource, and the receive end may recover all the multi-stream data. In this case, the DMRS is used to estimate a channel matrix, and a dimension of the channel matrix may be $N_{Rx} \times R$, where $N_{Rx}$ represents number of receive end antennas, and $R$ represents a number of transmission streams (also referred to as a number of transmission layers, or a number of spatial layers). Generally, one DMRS port (port) corresponds to one transmission stream, to be specific, for MIMO transmission with a number $R$ of transmission streams, a number of required DMRS ports is $R$. As a number of transmission layers of a data stream increases, a number of DMRS ports corresponding to the data stream also needs to increase. In an existing DMRS port extension solution, channel estimation performance may be affected when frequency domain density of a DMRS is reduced.

For example, a typical solution used in current channel estimation is to use a Wiener (Wiener) filter. Ideally, the Wiener filter assumes that a terminal device has known complete parameters (for example, a number of multipaths of a channel and a delay and power of each path) of a channel model, and actually, the Wiener filter assumes that a channel delay power spectrum meets specific distribution (for example, negative exponential distribution). Within a range allowed by a channel frequency domain coherence bandwidth, interpolation filtering performance of the Wiener filter is limited by frequency domain density of a reference signal (reference signal, RS).

In view of this, this application provides a reference signal sending and receiving method and a communication apparatus, to improve or resolve the foregoing problem.

Before the solutions of this application are described, the following descriptions are provided:

(1) In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.
(2) In this application, "first" and "second" are merely for ease of description, and are used to distinguish objects, but are not intended to limit the scope of embodiments of this application, and are not used to describe an order or a sequence of features. It should be understood that objects described in such a way are interchangeable in an appropriate circumstance, so that a solution other than embodiments of this application can be described.
(3) "Density of a reference signal (for example, a demodulation reference signal)" in this application may be understood as density of a time frequency resource (for example, an RE) for carrying the reference signal in a time frequency resource group (for example, a physical resource block bundling (PRB Bundling), or the "density" may be a proportion of the time frequency resource for carrying the reference signal in the time frequency resource group to time frequency resources in the time frequency resource group).

For example, it is assumed that the density of the time frequency resource occupied by the reference signal is σ. In this case, σ=B/P.

Herein, B represents, in one PRB bundling, a number of REs for carrying the reference signal (or referred to as a number of REs occupied by the reference signal), and P represents a number of all REs included in an REG, or P represents a number of REs for carrying data corresponding to the reference signal (a number of REs occupied by the data corresponding to the reference signal).

It should be understood that, the foregoing enumerated specific units of the time frequency resources are merely examples for description, and this application is not limited thereto. For example, B may further represent a number of subcarriers for carrying the reference signal (a number of subcarriers occupied by the reference signal) on a symbol corresponding to the reference signal in one RB, and P represents a number of all subcarriers included in the RB, or P represents a number of subcarriers for carrying the data corresponding to the reference signal (a number of subcarriers occupied by the data corresponding to the reference signal). In this case, density of the reference signal may also be referred to as frequency domain density of the reference signal. Alternatively, B may represent a number of symbols for carrying the reference signal (a number of symbols occupied by the reference signal) in one RB, and P represents a number of all symbols included in the RB; or P represents a number of symbols for carrying the data corresponding to the reference signal (a number of symbols occupied by the data corresponding to the reference signal). In this case, density of the reference signal may also be referred to as time domain density of the reference signal.

(4) A frequency domain resource mentioned in embodiments of this application may be a subcarrier, a resource block (resource block, RB), a resource block set (RB set), a resource block set group (RB set group, RBG), a bandwidth part BWP, or the like. This is not specifically limited in this application.

(5) A time domain resource mentioned in embodiments of this application may be a time unit, and the time unit may be a slot (slot), a symbol, a subframe, a frame, a mini-subframe, or a mini-slot. This is not specifically limited in this application.

(6) "Sending" and "receiving" in embodiments of this application represent signal transfer directions. For example, "sending information to XX" may be understood as that a destination end of the information is the XX, and may include direct sending through an air interface, or include indirect sending through an air interface by another unit or module. "Receiving information from YY" may be understood as that a source end of the information is YY, and may include direct receiving from YY through an air interface, or may include indirect receiving from YY through an air interface from another unit or module. "Sending" may alternatively be understood as "outputting" of a chip interface, and "receiving" may alternatively be understood as "inputting" of a chip interface.

In other words, sending and receiving may be performed between devices, for example, between a network device and a terminal device; or may be performed inside a device, for example, sending or receiving between components, modules, chips, software modules, or hardware modules inside the device through a bus, a cable, or an interface.

It may be understood that necessary processing, such as encoding and modulation, may be performed on the information between the source end at which the information is sent and the destination end, but the destination end may understand valid information from the source end. Similar descriptions in this application may be understood similarly, and details are not described again.

(7) In embodiments of this application, "indication" may include a direct indication and an indirect indication, or may include an explicit indication and an implicit indication. Information indicated by a piece of information (for example, the following indication information) is referred to as to-be-indicated information. In a specific implementation process, the to-be-indicated information may be indicated in a plurality of manners, for example, but not limited to, directly indicating the to-be-indicated information, for example, indicating the to-be-indicated information, an index of the to-be-indicated information, or the like. Alternatively, the to-be-indicated information may be indirectly indicated by indicating other information. There is an association relationship between the other information and the to-be-indicated information. Alternatively, only a part of the to-be-indicated information may be indicated, and the remaining part of the to-be-indicated information is known or pre-agreed on. For example, specific information may be indicated by using an arrangement sequence of pieces of information that are pre-agreed on (for example, predefined in a protocol), to reduce indication overheads to some extent. A specific indication manner is not limited in this application. It may be understood that, for a sender of the indication information, the indication information may indicate the to-be-indicated information, and for a receiver of the indication information, the indication information may be used to determine the to-be-indicated information.

The following uses an example in which the reference signal is a DMRS to describe in detail the reference signal sending and receiving method and the communication apparatus in embodiments of this application with reference to accompanying drawings. In embodiments of this application, an example in which the reference signal is the DMRS is used to describe the technical solutions in embodiments of this application. This should not constitute any limitation on this application. The reference signal in this application may be any reference signal that can be used for channel estimation, for example, a cell-specific reference signal (cell-specific reference signal, CRS), or another reference signal that is used to implement a same or similar function. In a communication system that may appear in the future, a name of the reference signal may change. However, provided that the reference signal is essentially the same as the DMRS, the technical solutions of this application are applicable.

It should be understood that, in the following method, a network device may correspond to, for example, the network device 101 in FIG. 1, and a terminal device may be any one of a plurality of terminal devices communicatively connected to the network device, for example, any one of the terminal device 102 to the terminal device 107 in FIG. 1.

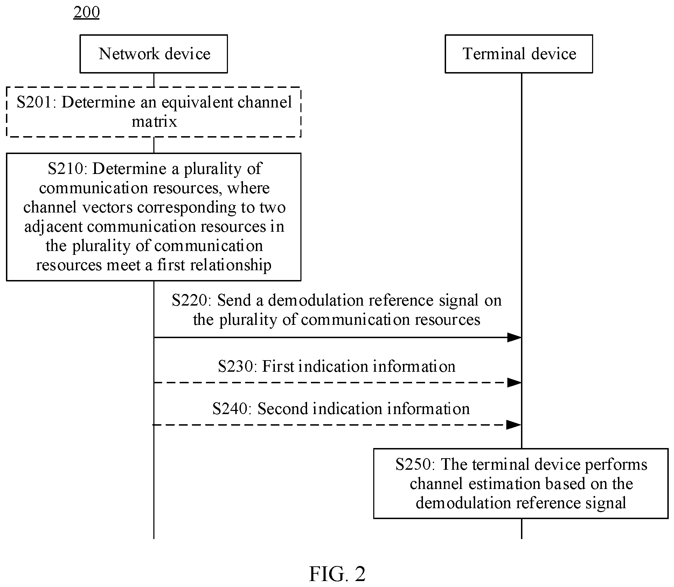

FIG. 2 is a schematic flowchart of a reference signal sending and receiving method 200 according to an embodiment of this application. The method 200 may include the following steps.

S210: A network device determines a plurality of communication resources, where channel vectors corresponding to any two adjacent communication resources in the plurality of communication resources meet a first relationship.

The plurality of communication resources are used to carry a DMRS. The first relationship may include that at least one of a spatial included angle and a rotation included angle between the channel vectors is a fixed value. For ease of description, a fixed value corresponding to the spatial included angle is denoted as a first value, and a fixed value corresponding to the rotation included angle is denoted as a second value.

The adjacent communication resources in the plurality of communication resources may be understood as two communication resources whose indexes are close to each other. For example, the communication resources are frequency domain resources (for example, subcarriers), and indexes of the plurality of subcarriers are 0, 2, 5, and 11 respectively. In this case, the two subcarriers whose indexes are 0 and 2 are adjacent subcarriers. Similarly, the subcarrier whose index is 2 and the subcarrier whose index is 5 are adjacent subcarriers, and the rest may be deduced by analogy.

S220: The network device sends a demodulation reference signal to a terminal device on the plurality of communication resources. Correspondingly, the terminal device receives the demodulation reference signal. Optionally, the method further includes the following step.

S230: The network device sends first indication information to the terminal device. Correspondingly, the terminal device receives the first indication information from the network device.

The first indication information indicates the communication resources for carrying the demodulation reference signal. In other words, the first indication information indicates the plurality of communication resources.

Optionally, the method further includes the following steps.

S240: The network device sends second indication information to the terminal device. Correspondingly, the terminal device receives the second indication information from the network device.

The second indication information indicates at least one of the first value and the second value.

For example, a plurality of first values and a plurality of second values, a correspondence between the first value and an index, and a correspondence between the second value and an index may be pre-configured on a terminal device side. The network device indicates at least one of the first value and the second value by indicating the index corresponding to the first value and the index corresponding to the second value.

Alternatively, the network device includes at least one of the first value and the second value in the second indication information.

Optionally, at least one of the first value and the second value may be stipulated in a protocol or preset in the terminal device. In this case, the network device does not need to indicate at least one of the first value and the second value. That the first value and/or the second value are/is preset in the terminal device may be understood as that the terminal device configures a unique first value and/or second value.

In other words, the terminal device may determine one first value and/or one second value through protocol stipulation or presetting.

The foregoing indication information may be carried in downlink control information (downlink control information, DCI), radio resource control (radio resource information, RRC) information signaling, or other downlink signaling. This is not limited.

Optionally, before S240, the network device receives capability information from the terminal device, where the capability information indicates that the terminal device supports or does not support channel estimation based on the first value and/or the second value (which may also be referred to as manifold-based channel estimation). Correspondingly, that the network device sends the second indication information to the terminal device may include: The network device sends the second indication information to the terminal device when determining, based on the capability information, that the terminal device supports channel estimation based on the first value and/or the second value.

S250: The terminal device performs channel estimation based on the demodulation reference signal.

For example, the terminal device determines, based on the first indication information, the plurality of communication resources for carrying the demodulation reference signal, and receives, on the communication resources, the demodulation reference signal from the network device; and the terminal device performs channel estimation based on the demodulation reference signal.

In a possible implementation, the terminal device performs manifold-based channel estimation based on the demodulation reference signal. Manifold-based channel estimation may specifically include the following several steps:

(1) The terminal device determines, based on the demodulation reference signal, channel vectors corresponding to the demodulation reference signal. For example, the channel vectors include $s_0$ and $s_1$.

(2) The terminal device calculates channel interpolation parameters $\alpha(\theta, \phi, t)$ and $\beta(\theta, \phi, t)$ between $s_0$ and $s_1$ based on the first value (denoted as $\theta$) and/or the second value (denoted as $\phi$). Refer to Formula (7) and Formula (8) respectively:

$$\alpha(\theta, \phi, t) = \left( \cos(t \cdot \theta) - \cos(\theta) \cdot \frac{\sin(t \cdot \theta)}{\sin(\theta)} \right) \cdot e^{+j\phi \cdot t} \qquad (7)$$

$$\beta(\theta, \phi, t) = \frac{\sin(t \cdot \theta)}{\sin(\theta)} \cdot e^{+j\phi \cdot (t-1)} \qquad (8)$$

(3) An interpolated channel vector between the channel vectors corresponding to the demodulation reference signal is calculated based on the channel interpolation parameters, to complete channel estimation.

For example, an interpolated channel vector $\mathbf{s_t}$ between $s_0$ and $s_1$ is calculated, and $\mathbf{s_t}$ may be represented as:

$$s_t = s_0 \cdot \alpha(\theta, \phi, t) + s_1 \cdot \beta(\theta, \phi, t) \qquad (9)$$

Herein, *t* in Formula (7) to Formula (9) represents a relative location of the interpolated channel vector, and $0 \leq t \leq$

1.

Based on the foregoing solution, the channel vectors corresponding to the any two adjacent time frequency resources in the plurality of time frequency resources for transmitting the reference signal are set to meet the first relationship, so that a high-dimensional DMRS channel can continuously change in frequency domain or time domain. Therefore, when interpolation is performed in high-dimensional space, channel estimation performance can be improved when frequency domain density is low.

It should be understood that, for a process in which the terminal device performs channel estimation based on the demodulation reference signal, refer to an existing related solution. Details are not described again.

The following describes in detail a possible implementation of step S210 by using two cases in which the communication resource is a first frequency domain resource or a first time domain resource.

**Case 1: The communication resource is the first frequency domain resource.**

The first frequency domain resource is a frequency domain resource in a scheduled bandwidth, and a frequency domain range of the first frequency domain resource is less than or equal to a frequency domain range of the scheduled bandwidth. The scheduled bandwidth is a bandwidth scheduled by the network device for the terminal device. Alternatively, the communication resource is a frequency domain resource. To be specific, in this case, a time domain location corresponding to the reference signal is not limited. For example, the time domain location corresponding to the reference signal may be one OFDM symbol or a plurality of OFDM symbols.

In this case, a channel vector corresponding to the communication resource may be determined based on a channel matrix corresponding to the first frequency domain resource. The channel matrix may represent a wireless channel through which a data signal and/or the DMRS in the first frequency domain resource pass/passes.

For example, it is assumed that a channel vector corresponding to a communication resource (for example, an RE) is L, and L may be a column of a channel matrix at a communication resource location. Alternatively, a dimension of L is $N_{Rx} \times 1$, and $N_{Rx}$ represents a number of receive end antennas.

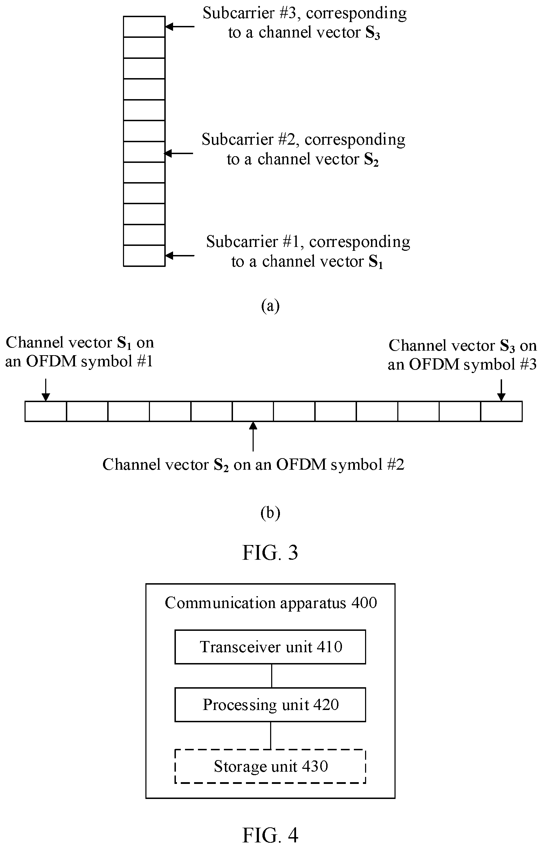

The following describes the first relationship by using an example in which the communication resource is a subcarrier. As shown in (a) in FIG. 3, the plurality of communication resources include a subcarrier #1, a subcarrier #2, and a subcarrier #3 (which correspond to one OFDM symbol in time domain), where channel vectors corresponding to the subcarrier #1, the subcarrier #2, and the subcarrier #3 are respectively $s_1$, $s_2$, and $s_3$. That the channel vectors on the adjacent communication resources in the plurality of communication resources meet the first relationship may be understood as follows: A spatial included angle between $s_1$ and $s_2$ is $\theta_1$, and a spatial included angle between $s_2$ and $s_3$ is $\theta_1$ (an example of the first value); or a rotation included angle between $s_1$ and $s_2$ is $\phi_1$ (an example of the second value), and a spatial included angle between $s_2$ and $s_3$ is $\phi_1$; or a spatial included angle between $s_1$ and $s_2$ is $\theta_1$ and a rotation included angle is $\phi_1$, and a spatial included angle between $s_2$ and $s_3$ is $\theta_1$ and a spatial included angle is $\phi_1$.

In a possible implementation of S210, the network device determines spatial included angles and/or rotation included angles between channel vectors at every two communication resource locations in the first frequency domain resources. The network device determines the first value and/or the second value based on the spatial included angles and/or the rotation included angles between every two channel vectors and frequency domain density of the demodulation reference signal, and determines, as the plurality of communication resources, subcarriers corresponding to channel vectors whose spatial included angle between the channel vectors is the first value and/or whose rotation included angle between the channel vectors is the second value.

For example, when the first frequency domain resource includes a subcarrier #1 to a subcarrier #5, channel vectors corresponding to the subcarrier #1 to the subcarrier #5 are respectively $s_1$, $s_2$, $s_3$, $s_4$, and $s_5$, and known frequency domain density of the reference signal is 3/5 (in other words, three of the five subcarriers need to be selected), the network device traverses the channel vectors $s_1$, $s_2$, $s_3$, $s_4$, and $s_5$, and determines a spatial included angle and/or a rotation included angle between each of the five channel vectors and another channel vector, that is, determines spatial included angles and/or rotation included angles between every two channel vectors. The network device determines that two equal spatial included angles in the spatial included angles between every two channel vectors are the first value and/or two equal rotation included angles in the rotation included angles between every two channel vectors are the second value (for ease of description, the spatial included angle is denoted as $\theta_1$, and the rotation included angle is denoted as $\phi_1$). $\theta_1$ is not equal to spatial included angles between every two other channel vectors and/or $\phi_1$ is not equal to rotation included angles between every two other channel vectors. The two equal spatial included angles and/or rotation included angles correspond to three channel vectors. For example, a spatial included angle between the channel vectors $s_1$ and $s_2$ is $\theta_1$ and/or a rotation included angle is $\phi_1$, and a spatial included angle between $s_2$ and $s_5$ is $\theta_1$ and/or a rotation included angle is $\phi_1$, which may be understood that the spatial included angle $\theta_1$ and/or the rotation included angle $\phi_1$ correspond/corresponds to three channel vectors, and the three channel vectors include $s_1$, $s_2$, and $s_5$. Further, the network device determines that the plurality of communication resources include subcarriers corresponding to the three channel vectors. For example, when the three channel vectors include $s_1$, $s_2$, and $s_5$, the plurality of communication resources include the subcarrier #1, the subcarrier #2, and the subcarrier #5.

**Case 2: The communication resource is the first time domain resource.**

For example, the first time domain resource may include one or more time units.

Alternatively, the communication resource is a time domain resource. To be specific, in this case, a frequency domain location corresponding to the reference signal is not limited. For example, the frequency domain location corresponding to the reference signal may be one RB.

In this case, a channel vector corresponding to the communication resource may be determined based on a channel matrix corresponding to the first time domain. The channel matrix may represent a wireless channel through which a data signal and/or the DMRS in the first time domain resource pass/passes.

For example, it is assumed that a channel vector corresponding to a communication resource (for example, an RE) is L, and L may be a column of a channel matrix at a communication resource location. Alternatively, a dimension of L is $N_{Rx} \times 1$, and $N_{Rx}$ represents a number of receive end antennas.

The following describes the first relationship by using an example in which the communication resource is an OFDM symbol. As shown in (b) in FIG. 3, the plurality of communication resources include a symbol #1, a symbol #2, and a symbol #3, where channel vectors corresponding to the symbol #1, the symbol #2, and the symbol #3 are respectively $s_1$, $s_2$, and $s_3$. That the channel vectors on the adjacent communication resources in the plurality of communication resources meet the first relationship may be understood as follows: A spatial included angle between $s_1$ and $s_2$ is $\theta_1$, and a spatial included angle between $s_2$ and $s_3$ is $\theta_1$ (an example of the first value); or a rotation included angle between $s_1$ and $s_2$ is $\phi_1$ (an example of the second value), and a spatial included angle between $s_2$ and $s_3$ is $\phi_1$; or a spatial included angle between $s_1$ and $s_2$ is $\theta_1$ and a rotation included angle is $\phi_1$, and a spatial included angle between $s_2$ and $s_3$ is $\theta_1$ and a spatial included angle is $\phi_1$.

In a possible implementation of S210, the network device determines spatial included angles and/or rotation included angles between channel vectors at every two communication resource locations in the first time domain resources. The network device determines the first value based on the spatial included angles and/or the rotation included angles between the channel vectors and time domain density of the demodulation reference signal, and determines, as the plurality of communication resources, symbols corresponding to channel vectors whose spatial included angle between the channel vectors is the first value and/or whose rotation included angle between the channel vectors is the second value.

For example, when the first time domain resource includes a symbol #1 to a symbol #5, channel vectors corresponding to the symbol #1 to the symbol #5 are respectively $s_1$, $s_2$, $s_3$, $s_4$, and $s_5$, and known time domain density of the reference signal is 3/5 (in other words, three of the five subcarriers need to be selected), the network device traverses the channel vectors $s_1$, $s_2$, $s_3$, $s_4$, and $s_5$, and determines a spatial included angle and/or a rotation included angle between each of the five channel vectors and another channel vector, that is, determines spatial included angles and/or rotation included angles between every two channel vectors. The network device determines that two equal spatial included angles in the spatial included angles between every two channel vectors are the first value and/or two equal rotation included angles in the rotation included angles between every two channel vectors are the second value (for ease of description, the spatial included angle is denoted as $\theta_1$, and the rotation included angle is denoted as $\phi_1$). $\theta_1$ is not equal to spatial included angles between every two other channel vectors and/or $\phi_1$ is not equal to rotation included angles between every two other channel vectors. The two equal spatial included angles and/or rotation included angles correspond to three channel vectors. For example, a spatial included angle between the channel vectors $s_1$ and $s_2$ is $\theta_1$ and/or a rotation included angle is $\phi_1$, and a spatial included angle between $s_2$ and $s_5$ is $\theta_1$ and/or a rotation included angle is $\phi_1$, which may be understood that the spatial included angle $\theta_1$ and/or the rotation included angle $\phi_1$ correspond/corresponds to three channel vectors, and the three channel vectors include $s_1$, $s_2$, and $s_5$. Further, the network device determines that the plurality of communication resources include symbols corresponding to the three channel vectors. For example, when the three channel vectors include $s_1$, $s_2$, and $s_5$, the plurality of communication resources include the symbol #1, the symbol #2, and the symbol #5.

Optionally, before S210, the method may further include the following step.

S201: The network device determines the channel matrix.

Specifically, the network device determines the channel matrix corresponding to the first frequency domain resource or the first time domain resource.

For example, the network device determines the channel matrix based on a reference signal #1. The reference signal #1 may include at least one reference signal within a frequency domain range corresponding to the first frequency domain resource. The reference signal #1 may be a sounding reference signal (sounding reference signal, SRS) and/or a CSI-RS. For a specific process in which the network device determines the channel matrix based on the reference signal #1, refer to existing related descriptions. For example, a dimension of the channel matrix is $N_{Rx} \times N_{Tx} \times R$, where $N_{Rx}$ represents the number of receive end antennas, $N_{Tx}$ represents a number of transmit end antennas, and R represents a number of ports of the reference signal #1.

The foregoing mainly describes a solution of sending the reference signal in downlink communication. The method provided in this embodiment of this application is also applicable to sending a reference signal in uplink communication. For example, in S201, the network device may determine a physical uplink shared channel (physical uplink shared channel, PUSCH) channel matrix, and determine the plurality of communication resources based on the channel matrix. Two adjacent communication resources in the plurality of communication resources meet the first relationship, and the plurality of communication resources may be used to carry a PUSCH DMRS. The network device indicates a frequency domain resource of the PUSCH DMRS to the terminal device, so that the terminal device sends the PUSCH DMRS. The network device performs channel estimation based on the PUSCH DMRS.

The foregoing describes in detail the reference signal sending and receiving method provided in embodiments of this application with reference to FIG. 2 and FIG. 3. The following describes a communication apparatus, a network device, and a terminal device provided in this application with reference to FIG. 4 to FIG. 7.

FIG. 4 is a diagram of a communication apparatus 400 according to an embodiment of this application.

The communication apparatus 400 includes a transceiver unit 410 and a processing unit 420. The transceiver unit 410 may be configured to implement a corresponding communication function. The transceiver unit 410 may also be referred to as a communication interface or a communication unit. The processing unit 420 may be configured to perform data processing.

Optionally, the communication apparatus 400 further includes a storage unit. The storage unit may be configured to store instructions and/or data. The processing unit 420 may read the instructions and/or the data in the storage unit, so that the apparatus implements actions of the network device in the foregoing method embodiments.

In a possible design, the communication apparatus 400 may implement steps or procedures performed by the network device in the foregoing method embodiments. The transceiver unit 410 may be configured to perform receiving and sending-related operations of the network device in the foregoing method embodiments, for example, receiving and sending-related operations of the network device in the embodiment shown in FIG. 2. The processing unit 420 may be configured to perform processing-related operations of the network device in the foregoing method embodiments, for example, processing-related operations of the network device in the embodiment shown in FIG. 2.

In another possible design, the communication apparatus 400 may be the terminal device in the foregoing embodiments, or may be a component (for example, a chip) of the terminal device. The communication apparatus 400 may implement steps or procedures performed by the terminal device in the foregoing method embodiments. The transceiver unit 410 may be configured to perform receiving and sending related operations of the terminal device in the foregoing method embodiments, for example, receiving and sending-related operations of the terminal device in the embodiment shown in FIG. 2. The processing unit 420 may be configured to perform processing-related operations of the terminal device in the foregoing method embodiments, for example, processing-related operations of the terminal device in the embodiment shown in FIG. 2.

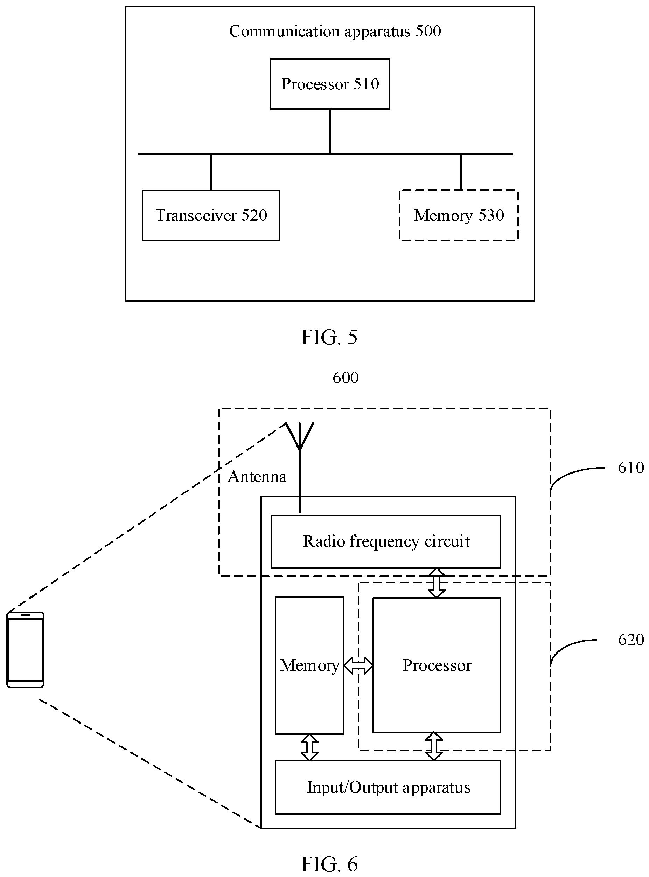

FIG. 5 is a block diagram of a communication apparatus 500 according to an embodiment of this application. The apparatus 500 includes a processor 510, and the processor 510 is coupled to a memory 530. Optionally, the apparatus 500 further includes the memory 530, configured to store a computer program or instructions and/or data. The processor 510 is configured to execute the computer program or the instructions stored in the memory 530, or read the data stored in the memory 530, to perform the methods in the foregoing method embodiments.

Optionally, there are one or more processors 510.

Optionally, there are one or more memories 530.

Optionally, the memory 530 and the processor 510 are integrated together or separately disposed.

Optionally, as shown in FIG. 5, the apparatus 500 further includes a transceiver 520, and the transceiver 520 is configured to receive and/or send a signal. For example, the processor 510 is configured to control the transceiver 520 to receive and/or send the signal.

In a solution, the apparatus 500 is configured to implement the operations performed by the network device in the foregoing method embodiments.

For example, the processor 510 is configured to execute the computer program or the instructions stored in the memory 530, to implement related operations of the network device in the foregoing method embodiments, for example, the method performed by the network device in the embodiment shown in FIG. 2.

When the communication apparatus 500 is the network device, for example, a base station, FIG. 6 is a simplified diagram of a structure of the base station. The base station includes a part 610 and a part 620. The part 610 is mainly configured to receive and transmit a radio frequency signal and perform conversion between a radio frequency signal and a baseband signal. The part 620 is mainly configured to perform baseband processing and control the base station. The part 610 may be usually referred to as a transceiver unit, a transceiver machine, a transceiver circuit, a transceiver, or the like. The part 620 is usually a control center of the base station, may be usually referred to as a processing unit, and is configured to control the base station to perform a processing operation on a network device side in the foregoing method embodiments.

The transceiver unit of the part 610 may also be referred to as a transceiver machine, a transceiver, or the like, and includes an antenna and a radio frequency circuit. The radio frequency circuit is mainly configured to perform radio frequency processing. Optionally, a component that is in the part 610 and that is configured to implement a receiving function may be considered as a receiving unit, and a component that is in the part 610 and that is configured to implement a sending function may be considered as a sending unit. That is, the part 610 includes the receiving unit and the sending unit. The receiving unit may also be referred to as a receiver machine, a receiver, a receive circuit, or the like. The sending unit may be referred to as a transmitter machine, a transmitter, a transmit circuit, or the like. The part 620 may include one or more boards, and each board may include one or more processors and one or more memories. The processor is configured to read and execute a program in the memory, to implement a baseband processing function and control the base station. If there are a plurality of boards, the boards may be interconnected with each other to enhance a processing capability. In an optional implementation, a plurality of boards may share one or more processors, or a plurality of boards share one or more memories, or a plurality of boards share one or more processors at the same time.

For example, in an implementation, the transceiver unit of the part 610 is configured to perform receiving and sending-related steps performed by the network device in the embodiment shown in FIG. 2. The part 620 is configured to perform processing-related steps performed by the network device in the embodiment shown in FIG. 2.

It should be understood that FIG. 6 is merely an example instead of a limitation. The foregoing network device including the transceiver unit and the processing unit may not depend on the structure shown in FIG. 6.

When the communication apparatus 500 is a chip, the chip includes a transceiver unit and a processing unit. The transceiver unit may be an input/output circuit or a communication interface. The processing unit is a processor, a microprocessor, or an integrated circuit integrated on the chip.

In another solution, the communication apparatus 500 is configured to implement operations performed by the terminal device in the foregoing method embodiments.

For example, the processor 510 is configured to execute the computer program or the instructions stored in the memory 530, to implement related operations of the terminal device in the foregoing method embodiments, for example, the method performed by the terminal device in the embodiment shown in FIG. 2.

In an implementation process, steps in the foregoing methods may be completed by using an integrated logic circuit of hardware in the processor 510 or an instruction in a software form. The method disclosed with reference to embodiments of this application may be directly performed by a hardware processor, or may be performed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory 530. The processor 510 reads information in the memory 530, and completes the steps of the foregoing method in combination with hardware of the processor 510. To avoid repetition, details are not described herein again.

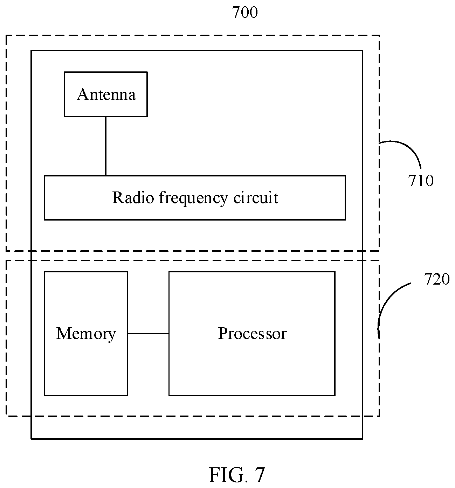

When the communication apparatus 500 is the terminal device, FIG. 7 is a simplified diagram of a structure of the terminal device. For ease of understanding and convenience of figure illustration, an example in which the terminal device is a mobile phone is used in FIG. 7. As shown in FIG. 7, the terminal device includes a processor, a memory, a radio frequency circuit, an antenna, and an input/output apparatus. The processor is mainly configured to: process a communication protocol and communication data, control the terminal device, execute a software program, process data of the software program, and the like. The memory is mainly configured to store the software program and data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, for example, a touchscreen, a display, or a keyboard, is mainly configured to: receive data input by a user and output data to the user. It should be noted that some types of terminal devices may have no input/output apparatus.

When needing to send data, after performing baseband processing on the to-be-sent data, the processor outputs a baseband signal to the radio frequency circuit; and the radio frequency circuit performs radio frequency processing on the baseband signal and then sends the radio frequency signal to the outside in a form of an electromagnetic wave through the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data. For ease of description, FIG. 7 shows only one memory and one processor. In an actual terminal device product, there may be one or more processors and one or more memories. The memory may also be referred to as a storage medium, a storage device, or the like. The memory may be disposed independent of the processor, or may be integrated with the processor. This is not limited in this application.

In this embodiment of this application, the antenna and the radio frequency circuit that have a transceiver function may be considered as a transceiver unit of the terminal device, and the processor that has a processing function may be considered as a processing unit of the terminal device.

As shown in FIG. 7, the terminal device includes a transceiver unit 710 and a processing unit 720. The transceiver unit 710 may also be referred to as a transceiver, a transceiver machine, a transceiver apparatus, or the like. The processing unit 720 may also be referred to as a processor, a processing board, a processing module, a processing apparatus, or the like.

Optionally, a component that is in the transceiver unit 710 and that is configured to implement a receiving function may be considered as a receiving unit, and a component that is in the transceiver unit 710 and that is configured to implement a sending function may be considered as a sending unit. That is, the transceiver unit 710 includes the receiving unit and the sending unit. The transceiver unit sometimes may also be referred to as a transceiver machine, a transceiver, a transceiver circuit, or the like. The receiving unit sometimes may also be referred to as a receiver machine, a receiver, a receive circuit, or the like. The sending unit sometimes may also be referred to as a transmitter machine, a transmitter, a transmit circuit, or the like.

For example, in an implementation, the transceiver unit 710 is configured to perform a receiving operation of the terminal device in the embodiment shown in FIG. 2. The processing unit 720 is configured to perform a processing action on a terminal device side in the embodiment shown in FIG. 2.

It should be understood that FIG. 7 is merely an example instead of a limitation. The terminal device including the transceiver unit and the processing unit may not depend on the structure shown in FIG. 7.

When the communication apparatus 500 is a chip, the chip includes a transceiver unit and a processing unit. The transceiver unit may be an input/output circuit or a communication interface. The processing unit may be a processor, a microprocessor, or an integrated circuit integrated on the chip.

An embodiment of this application further provides a network device, including a processor. The processor is coupled to a memory, and the memory is configured to store a program or instructions. When the program or the instructions are executed by the processor, the network device is enabled to perform the reference signal sending method.

An embodiment of this application further provides a network device, including a transceiver unit and a processing unit. The transceiver unit may be configured to perform sending and receiving steps performed by the network device in the foregoing method embodiments. The processing unit may be configured to perform steps other than sending and receiving performed by the network device in the foregoing method embodiments.

An embodiment of this application further provides a computer-readable storage medium. The computer-readable storage medium stores a computer program or instructions. When the computer program or the instructions are executed, a computer is enabled to perform the reference signal sending.

An embodiment of this application further provides a computer program product. The computer program product includes computer program code. When the computer program code is run on a computer, the computer is enabled to perform the method performed by the network device.

An embodiment of this application further provides a computer program product. The computer program product includes computer program code. When the computer program code is run on a computer, the computer is enabled to perform the method performed by the terminal device.

An embodiment of this application further provides a communication system. The communication system includes the network device and the terminal device in the foregoing embodiments.

In an example, the communication system includes the network device and the terminal device in the embodiment described above with reference to FIG. 2.

For explanations and beneficial effect of related content in any one of the communication apparatuses provided above, refer to the corresponding method embodiments provided above. Details are not described herein again.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments. In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for indicating a computing device (which may be a personal computer, a server, a network device, or the like) to perform all or some of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A reference signal sending method, comprising:

   determining a plurality of communication resources, wherein the plurality of communication resources are used to carry a demodulation reference signal, channel vectors corresponding to any two adjacent communication resources in the plurality of communication resources meet a first relationship, and the first relationship comprises that a spatial included angle between the channel vectors is a first value and/or a rotation included angle between the channel vectors is a second value; and
   sending the demodulation reference signal to a terminal device on the plurality of communication resources.

2. The method according to claim 1, wherein the communication resource is a first frequency domain resource, and before determining the plurality of communication resources, the method further comprises:
   determining a channel vector corresponding to the first frequency domain resource in a scheduled bandwidth, wherein a frequency domain range of the first frequency domain resource is less than or equal to a frequency domain range of the scheduled bandwidth.

3. The method according to claim 1, wherein the communication resource is a time domain resource, and before determining the plurality of communication resources, the method further comprises:
   determining a channel vector within a first time domain range.

4. The method according to claim 2 or 3, wherein the method further comprises:
   determining at least one of the first value and the second value based on the channel vector and density of the demodulation reference signal.

5. The method according to any one of claims 1 to 4, wherein the method further comprises:
   sending first indication information to the terminal device, wherein the first indication information indicates the plurality of communication resources.

6. The method according to any one of claims 1 to 5, wherein the method further comprises:
   sending second indication information to the terminal device, wherein the second indication information indicates the first value and/or the second value, and the first value and/or the second value are/is used for channel estimation.

7. A reference signal receiving method, comprising:

   determining a plurality of communication resources, wherein channel vectors corresponding to any two adjacent communication resources in the plurality of communication resources meet a first relationship, and the first relationship comprises that a spatial included angle between the channel vectors is a first value and/or a rotation included angle between the channel vectors is a second value;

receiving a demodulation reference signal from a network device on the plurality of communication resources; and

performing channel estimation based on the demodulation reference signal.

8. The method according to claim 7, wherein the communication resource is a first frequency domain resource, a channel vector corresponding to the first frequency domain resource in a scheduled bandwidth is determined based on a channel matrix, and a frequency domain range of the first frequency domain resource is less than or equal to a frequency domain range of the scheduled bandwidth.

9. The method according to claim 7, wherein the communication resource is a time domain resource, and a channel vector corresponding to the time domain resource is determined based on a channel matrix within a first time domain range.

10. The method according to any one of claims 7 to 9, wherein the method further comprises:

receiving first indication information from the network device, wherein the first indication information indicates the plurality of communication resources; and
determining the plurality of communication resources comprises:
determining the plurality of communication resources based on the second indication information.

11. The method according to any one of claims 7 to 10, wherein the method further comprises:
receiving second indication information from the network device, wherein the second indication information indicates the first value and/or the second value, and the first value and/or the second value are/is used for channel estimation.

12. A communication apparatus, wherein the apparatus comprises a processing unit and a transceiver unit;

the processing unit is configured to determine a plurality of communication resources, wherein the plurality of communication resources are used to carry a demodulation reference signal, channel vectors corresponding to any two adjacent communication resources in the plurality of communication resources meet a first relationship, and the first relationship comprises that a spatial included angle between the channel vectors is a first value and/or a rotation included angle between the channel vectors is a second value; and
the transceiver unit is configured to send the demodulation reference signal to a terminal device on the plurality of communication resources.

13. The apparatus according to claim 12, wherein the communication resource is a first frequency domain resource, and the processing unit is further configured to:
determine a channel vector corresponding to the first frequency domain resource in a scheduled bandwidth, wherein a frequency domain range of the first frequency domain resource is less than or equal to a frequency domain range of the scheduled bandwidth.

14. The apparatus according to claim 12, wherein the communication resource is a time domain resource, and the processing unit is further configured to:
determine a channel vector within a first time domain range.

15. The apparatus according to claim 13 or 14, wherein the processing unit is further configured to:
determine at least one of the first value and the second value based on the channel vector and density of the demodulation reference signal.

16. The apparatus according to any one of claims 12 to 15, wherein the transceiver unit is further configured to:
send first indication information to the terminal device, wherein the first indication information indicates the plurality of communication resources.

17. The apparatus according to any one of claims 12 to 16, wherein the transceiver unit is further configured to:
send second indication information to the terminal device, wherein the second indication information indicates the first value and/or the second value, and the first value and/or the second value are/is used for channel estimation.

18. A communication apparatus, wherein the apparatus comprises a processing unit and a transceiver unit;

the processing unit is configured to determine a plurality of communication resources, wherein channel vectors corresponding to any two adjacent communication resources in the plurality of communication resources meet a first relationship, and the first relationship comprises that a spatial included angle between the channel vectors is a first value and/or a rotation included angle between the channel vectors is a second value;

the transceiver unit is configured to receive a demodulation reference signal from a network device on the plurality of communication resources; and

the processing unit is further configured to perform channel estimation based on the demodulation reference signal.

19. The apparatus according to claim 18, wherein the communication resource is a first frequency domain resource, a channel vector corresponding to the first frequency domain resource in a scheduled bandwidth is determined based on a channel matrix, and a frequency domain range of the first frequency domain resource is less than or equal to a frequency domain range of the scheduled bandwidth.

20. The apparatus according to claim 18, wherein the communication resource is a time domain resource, and a channel vector corresponding to the time domain resource is determined based on a channel matrix within a first time domain range.

21. The apparatus according to any one of claims 18 to 20, wherein the transceiver unit is further configured to:

receive first indication information from the network device, wherein the first indication information indicates the plurality of communication resources; and

the processing unit is specifically configured to determine the plurality of communication resources based on the first indication information.

22. The apparatus according to any one of claims 18 to 21, wherein the transceiver unit is further configured to: receive second indication information from the network device, wherein the second indication information indicates the first value and/or the second value, and the first value and/or the second value are/is used for channel estimation.

23. A communication apparatus, comprising a processor, wherein the processor is configured to enable, by executing a computer program or instructions or by using a logic circuit, the apparatus to perform the method according to any one of claims 1 to 6, or perform the method according to any one of claims 7 to 11.

24. The communication apparatus according to claim 23, wherein the apparatus further comprises a memory, and the memory is configured to store the computer program or the instructions.

25. The communication apparatus according to claim 23 or 24, wherein the communication apparatus is a chip or a chip system.

26. A computer-readable storage medium, wherein the computer-readable storage medium stores a computer program or instructions, and when the computer program or the instructions are run on a communication apparatus, the apparatus is enabled to perform the method according to any one of claims 1 to 6, or perform the method according to any one of claims 7 to 11.

27. A computer program product, comprising instructions, wherein when the instructions are run on a computer, the method according to any one of claims 1 to 6 is performed, or the method according to any one of claims 7 to 11 is performed.

FIG. 1

200

```
┌─────────────────────┐                              ┌─────────────────────┐
│   Network device    │                              │   Terminal device   │
└─────────────────────┘                              └─────────────────────┘
```

┌─────────────────────────────────────┐
╎ S201: Determine an equivalent channel ╎
╎              matrix                   ╎
└─────────────────────────────────────┘

┌─────────────────────────────────────┐
│    S210: Determine a plurality of     │
│   communication resources, where      │
│  channel vectors corresponding to two │
│  adjacent communication resources in  │
│    the plurality of communication     │
│   resources meet a first relationship │
└─────────────────────────────────────┘

S220: Send a demodulation reference signal on
the plurality of communication resources
────────────────────────────────────────────────▶

S230: First indication information
- - - - - - - - - - - - - - - - - - - - - - - - ▶

S240: Second indication information
- - - - - - - - - - - - - - - - - - - - - - - - ▶

┌─────────────────────────────────────┐
│   S250: The terminal device performs  │
│    channel estimation based on the    │
│    demodulation reference signal      │
└─────────────────────────────────────┘

FIG. 2

Subcarrier #3, corresponding
to a channel vector $S_3$

Subcarrier #2, corresponding
to a channel vector $S_2$

Subcarrier #1, corresponding
to a channel vector $S_1$

(a)

Channel vector $S_1$ on
an OFDM symbol #1

Channel vector $S_3$ on
an OFDM symbol #3

Channel vector $S_2$ on an OFDM symbol #2

(b)

FIG. 3

Communication apparatus 400

Transceiver unit 410

Processing unit 420

Storage unit 430

FIG. 4

Communication apparatus 500

Processor 510

Transceiver 520

Memory 530

FIG. 5

600

Antenna

Radio frequency circuit

610

Memory

Processor

620

Input/Output apparatus

FIG. 6

FIG. 7

## INTERNATIONAL SEARCH REPORT

| International application No. |
|---|
| **PCT/CN2023/116304** |

| A. | CLASSIFICATION OF SUBJECT MATTER |
|---|---|

H04L 25/02(2006.01)i

According to International Patent Classification (IPC) or to both national classification and IPC

| B. | FIELDS SEARCHED |
|---|---|

Minimum documentation searched (classification system followed by classification symbols)

IPC: H04L

Documentation searched other than minimum documentation to the extent that such documents are included in the fields searched

Electronic data base consulted during the international search (name of data base and, where practicable, search terms used)

CNABS, CNTXT, VEN, WOTXT, USTXT, EPTXT, CNKI, IEEE, 3GPP: 参考信号, 导频, 夹角, 频域, 时域, 向量, 信道估计, 信道向量, 相邻, 临近, angle, channel, RS, time domain, frequency domain, reference signal, estimation, vector, adjacent

| C. | DOCUMENTS CONSIDERED TO BE RELEVANT |
|---|---|

| Category* | Citation of document, with indication, where appropriate, of the relevant passages | Relevant to claim No. |
|---|---|---|
| A | WO 2021195975 A1 (HUAWEI TECHNOLOGIES CO., LTD.) 07 October 2021 (2021-10-07) description, page 1, line 20-page 5, line 28, and page 8, line 10-page 11, line 7 | 1-27 |
| A | CN 115499112 A (HUAWEI TECHNOLOGIES CO., LTD.) 20 December 2022 (2022-12-20) entire document | 1-27 |
| A | US 2020106581 A1 (AT & T INTELLECTUAL PROPERTY I, L.P.) 02 April 2020 (2020-04-02) entire document | 1-27 |
| A | US 2022085929 A1 (TELEFONAKTIEBOLAGET LM ERICSSON (PUBL)) 17 March 2022 (2022-03-17) entire document | 1-27 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **12 October 2023** | **18 October 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/116304**

| Patent document cited in search report | | | Publication date (day/month/year) | Patent family member(s) | | | Publication date (day/month/year) |
|---|---|---|---|---|---|---|---|
| WO | 2021195975 | A1 | 07 October 2021 | US | 2023029215 | A1 | 26 January 2023 |
| | | | | EP | 4120778 | A1 | 18 January 2023 |
| | | | | EP | 4120778 | A4 | 03 May 2023 |
| CN | 115499112 | A | 20 December 2022 | WO | 2022262532 | A1 | 22 December 2022 |
| US | 2020106581 | A1 | 02 April 2020 | US | 2021028903 | A1 | 28 January 2021 |
| | | | | US | 11374715 | B2 | 28 June 2022 |
| | | | | US | 10833823 | B2 | 10 November 2020 |
| | | | | US | 2022286250 | A1 | 08 September 2022 |
| | | | | WO | 2020068313 | A1 | 02 April 2020 |
| US | 2022085929 | A1 | 17 March 2022 | WO | 2020136416 | A1 | 02 July 2020 |
| | | | | EP | 3903438 | A1 | 03 November 2021 |

Form PCT/ISA/210 (patent family annex) (July 2022)